# EUROPÄISCHE PATENTSCHRIFT

(11) **EP 1 441 521 B1**
(45) Veröffentlichungstag und Bekanntmachung des Hinweises auf die Patenterteilung: **28.05.2008**
(21) Anmeldenummer: 04001052.2
(22) Anmeldetag: 20.01.2004
(51) Int. Cl.: H04N 7/088, H04N 5/44

(54) **Informationssystem für ein elektronisches Gerät**
Information system for an electronic device
Système d'information pour un appareil électronique

(30) Priorität: 23.01.2003 DE 10302539
(43) Veröffentlichungstag der Anmeldung: 28.07.2004
(73) Patentinhaber: LOEWE OPTA GmbH, 96317 Kronach (DE)
(72) Erfinder: Schaas, Gerhard, Dipl.-Ing., 96472 Rödental (DE)

(56) Entgegenhaltungen:
- WO-A-96/41472
- WO-A-98/52355
- US-A- 4 725 886
- US-A- 5 590 195
- US-A- 5 666 293

## Beschreibung

Die Erfindung betrifft ein Informationssystem für ein elektronisches Gerät mit einer Empfangsschaltung für den Empfang von über einen Kanal übertragenen digitalen und/oder analogen Fernsehsignalen und Informationssignalen mit den im Oberbegriff des Anspruchs 1 angegebenen Merkmalen.

Unter dem Namen Videotext, jetzt Fernsehtext, ist in der Bundesrepublik Deutschland ein Informationssystem eingeführt worden, bei dem in bestimmten Datenzeilen innerhalb der Vertikalaustastlücke des Fernsehsignals neben der laufenden Videoinformation Datenblöcke übertragen werden, die empfängerseitig mit Hilfe eines geeigneten Decoders in mehrfarbige alphanumerische Zeichen und auch Grafiken umgewandelt werden, die auf einem Fernsehbildschirm als Tafeln mit verschiedenartigen Inhalten dargestellt werden.

Die Tafeln werden als Datenblöcke sequentiell in der Vertikalaustastlücke übertragen und in einem dem empfängerseitigen Decoder zugeordneten Speicher abgelegt, so dass nach freier Wahl die unterbrechungsfreie Wiedergabe einer bestimmten Tafel möglich ist. Jeder Tafel ist eine Nummer zugeordnet. Diese Nummern, denen auch Unternummern zugeordnet sein können, können ebenfalls in einem Speicher abgelegt werden. Zur Steuerung des Datenselektors ist es lediglich erforderlich, die abgespeicherte Nummer oder eine Nummer als solche in den Speicher des Datenselektors einzugeben, damit dieser die sequentiell übertragenen Tafeln mit ihren Inhalten aus den Empfangsdaten selektieren und zur Anzeige bringen kann. Eine ausführliche Beschreibung des Teletextsystems ist in der "Fernseh- und Kinotechnik", No. 5/1984, Seiten 179 bis 185, und in "Rundfunktechnische Mitteilungen", Heft 3/1983, Seiten 116 bis 134, wiedergegeben.

Es ist darüber hinaus bekannt, ergänzend zum Fernsehtextsystem auch Daten eines Videoprogrammservice (VPS) zu übertragen. Bei diesem System sollen die von den Fernsehanstalten ausgestrahlten Programmbeiträge mit einer Datenkennung versehen werden, die ebenfalls den Programmbeitrag, den Beginn und das Ende kennzeichnet. Diese Datenkennung wird in einer bestimmten Datenzeile während der Vertikalaustastlücke des Fernsehsignals übertragen. Durch Vergleich dieser Datenkennung mit den gespeicherten Programmdaten kann eine automatische Aufzeichnung z.B. eines Videorecorders gestartet werden. Alternativ besteht auch die Möglichkeit, diese zusätzliche Datenkennung in den Videotextdatenzeilen unterzubringen, die auch die Daten für die Programmtafeln enthalten. Die Videotextdaten bestimmter Programmtafeln nach dem vorher beschriebenen VPV-System enthalten dann eine zusätzliche Datenkennung, über die der gerade gesendete Programmbeitrag identifizierbar ist. Hierdurch ist es möglich, auch über die innerhalb des Videotextsignals enthaltenen verdeckten, also nicht auf dem Bildschirm darstellbaren, Daten die automatische Aufzeichnung zu starten. Diese zusätzliche Information wird in den am häufigsten verfügbaren Tafeln (Übersichtstafeln) programmspezifisch angeboten.

Darüber hinaus ist es bekannt, Videotextseiten mit verschlüsselten Seitennummern, nämlich im Hexadezimalcode verschlüsselten Seitennummern, zu übertragen, die nur von einem Datenselektor selektiert werden können, der einen Speicher aufweist, in dem der Hexcode der entsprechenden auszuwählenden Seite ebenfalls enthalten ist. Es ist ferner bekannt, dass Unterseiten zur Übertragung von individuellen Informationen angemietet werden können. Dadurch ist es möglich, kunden- und gerätespezifische Informationen zu übertragen, die nur von einem Empfangsgerät empfangbar sind, dem die entsprechenden Unterseitennummern bekannt sind und in dessen Speicher diese Nummern eingegeben werden oder abgespeichert sind, um die entsprechende Seite aus dem Datenstring herauslesen zu können.

Es ist ferner bekannt, über einen sogenannten Servicekanal Programminformationen zu übertragen und auch andere Informationen, die zu bestimmten Tageszeiten gesendet werden. Diese Informationen, die im Videotextformat oder aber auch in einem davon abweichenden Format übertragen werden, können mit einem Datenselektor zu den bestimmten Zeiten bei Abstimmung des Gerätes auf den entsprechenden Kanal empfangen und abgespeichert werden. Dadurch ist es möglich, einen Elektronischen Program Guide (EPG) in einem Femsehempfangsgerät zu integrieren. Solche programmbezogenen Daten können aber auch aus den übertragenen Videotext- bzw. Teletextseiten selektiert und gespeichert werden. Ein Gerät und ein Verfahren zur Erstellung einer entsprechenden Übersicht der Programmtitel und sonstiger Informationen, die zu den Programmbeiträgen gehören, die gegenwärtig und zukünftig empfangbar sind, sind aus der DE 44 10 547 C2 bekannt. Darüber hinaus ist es aus dem DVB-Standard-Papier ETS 300468 "Specification for Service Information" (SI) in Digital Video Broadcast (DVB) Systems bekannt, im Transportprotokoll blockweise Daten zu übertragen, die als Informationsdaten vom DVB-Empfänger empfangen, selektiert und angezeigt werden können. Ein Programm zur Verwaltung derartiger empfangener Daten ist aus der EP 0 921 681 B1 bekannt.

Es ist darüber hinaus bekannt, dass über Fernsehkanäle kunden- und gerätespezifische Daten übertragen werden, die mit Adressen versehen sind, die nur von einem Empfangsgerät empfangbar sind, das für den Empfang dieser Adressen programmiert ist. Damit ist es beispielsweise möglich, eine Umprogrammierung der Bediensoftware eines Gerätes für den Empfang von digitalen Fernsehsignalen vorzunehmen. Zu diesem Zweck werden von dem Sender die entsprechenden Softwaremodule adressiert an alle angeschalteten Empfänger übertragen. Nur der adressierte Empfänger ist in der Lage, die geräte- oder gerätefamilienspezifischen Daten für die Umprogrammierung zu empfangen.

Aus der WO 96/41472 A ist ein TV-System sowie ein dazu korrespondierendes Verfahren mit herunterladbaren Features bekannt. Die Features dienen den Herstellern von TV-Geräten zur Korrektur von Fehlern in der Gerätesoftware, zum Updaten der Gerätesoftware sowie zur Erfüllung von Kompatibilitätsanforderungen. Die entsprechenden Daten der Features werden kompiliert und von einer Hauptsendestation an die Empfangsstationen gesendet. Die Daten werden in der adressierten Empfangsstation gespeichert. Die Software wird dann auf dem Gerät installiert oder ausgeführt.

Aus der DE 44 33 993 A1 ist eine Anlage zur Diebstahlsicherung für Fernsehgeräte und artverwandte Geräte mit einer Empfängerschaltung und einem Decodierer für Videotextseiten bekannt. Jedes Gerät ist dabei über den Videotext adressierbar, zu welchem Zweck eine individuelle Gerätenummer in einem Speicher im Gerät gespeichert ist und ein Prozessor vorgesehen ist, der empfangene Gerätenummem mit den abgespeicherten vergleicht. Stellt die Schaltungsanordnung fest, dass das Gerät adressiert ist, so veranlasst das Empfangsgerät eine Selbstzerstörung mindestens eines Teils der Elektronik, damit ein weiterer Empfang mit dem gestohlenen Gerät nicht mehr möglich ist.

Weiterhin ist aus der DE 195 02 922 A1 ein Verfahren zum Wiedergeben von in einem Fernseh- oder Hörfunk-Programmsignal enthaltenen Zusatzinformationen bekannt. Um das telefonische Bestellen von Produkten, die im Fernsehen oder Hörfunk präsentiert werden, für den Fernseh- bzw. Hörfunkteilnehmer so einfach wie möglich zu machen, wird vorgeschlagen, Zusatzinformationen mit Klarschrift- und ggf. Grafikinformationen, z.B. in Form von Untertiteln, innerhalb des Programmsignals in zeitlicher Korrelation zu dessen Programminhalt zu übertragen. Ferner enthalten die Zusatzinformationen eine Information über eine oder mehrere Telekommunikationsnummern. Die empfangenen Zusatzinformationen werden empfängerseitig für eine bestimmte Dauer zwischengespeichert. Auf einen ersten Befehl des Benutzers werden eine in der zuletzt empfangenen Zusatzinformation enthaltene Klarschrift- und ggf. Grafikinformation angezeigt. Sind Auswahlinformationen vorhanden, so wählt der Benutzer mittels einer veränderlichen Markierung aus den angezeigten Telefonverbindungen die gewünschte aus. Auf einen zweiten Befehl des Benutzers hin wird die der gewünschten Telefonverbindung zugeordnete Telekommunikationsnummer aus der Zusatzinformation entnommen und an eine Wählvermittelungseinrichtung, z. B. Modem, weitergeleitet. Dort wird die Telekommunikationsnummer ggf. durch eine Geräte-Nummer ergänzt, welche den Benutzer identifiziert und z. B. in einem PROM-Speicher abgelegt ist.

Es hat sich gezeigt, dass die bekannten Systeme für die unmittelbare Unterrichtung der Benutzer von Fernsehempfangsgeräten insbesondere mit Sicherheitsinformationen, die das Gerät betreffen, unzulänglich sind. Es ist deshalb Aufgabe der Erfindung, hier Abhilfe zu schaffen und durch ein entsprechendes Informationssystem sicherzustellen, dass der Endverbraucher bzw. Kunde Informationen auch tatsächlich erhält, die für ihn oder das betreffende Gerät von besonderem Interesse sind. Dies sind insbesondere sicherheitstechnische Hinweise, wenn beispielsweise sich im Laufe der Lebensdauer eines Gerätes herausstellt, dass ein Defekt in der Schaltung des Gerätes zu einem Brand oder zu anderen sicherheitsrelevanten Ausfällen führen kann.

Die Aufgabe löst die Erfindung durch Ausgestaltung des Informationssystems gemäß der im Anspruch 1 angegebenen Lehre.

Das Informationssystem, das auf bekannten Übertragungssystemen aufbaut, sieht hierzu vor, dass mindestens eine gerätefamilienspezifische Adressierung der Geräte erfolgt. Es kann darüber hinaus auch jedes einzelne Gerät einer Familie durch entsprechende Unteradressierung angesprochen werden. Die Unteradressierung kann beispielsweise auch die Geräteseriennummer einschließen. Diese gerätefamilienspezifischen Adressen und Unteradressen bis hin zur Gerätenummer sind werksseitig in dem Gerät abgespeichert. Sie können auch, wenn das Gerät eine Programmierung zulässt, nachträglich in einem Speicher abgespeichert werden, beispielsweise durch einen Servicefachmann mittels eines Servicegerätes, das angeschlossen wird, oder durch Eingabe mittels eines Fernbedienungsgebers bei Aufrufen eines Menüs, das auf dem geräteeigenen Display oder auf einem angeschlossenen Monitor angezeigt wird. Das Informationssystem ist nicht nur auf Fernsehempfangsgeräte mit Bildschirm beschränkt, sondern kann auch angewendet werden auf DVD-Boxen oder andere Beistelldecoder, die mit einem Bildschirmgerät verbindbar sind, ebenso auch auf Aufzeichnungsgeräte, die mit solchen Anzeigegeräten gekoppelt sind. Die Informationsinhalte selbst können unverschlüsselt oder auch verschlüsselt übertragen werden. Letzteres empfiehlt sich dann, wenn die Inhalte nur von den betreffenden Besitzern des Endgerätes gelesen werden und nicht für jedermann zugänglich sein sollen. Dies ist beispielsweise der Fall, wenn eine gerätespezifische Rückrufaktion notwendig wird, um sicherheitstechnische Mängel an dem Gerät zu beheben.

Die Informationen selbst können unterschiedliche Inhalte besitzen. Bezogen auf sicherheitstechnische Anforderungen können diese beispielsweise den Hinweis für den Benutzer enthalten, dass festgestellt worden ist, dass an bestimmten Schaltungsstellen Überhitzungen auftreten können. Um die entsprechenden Änderungen in die Schaltung einbringen zu können, soll der nächstliegende Fachhändler aufgesucht werden. Diese Information kann selbstverständlich auch in einem Speicher abgespeichert werden, damit sie beispielsweise beim Wiedereinschalten des Gerätes automatisch erscheint. Die Information wird nämlich nicht ständig vom Sender mit den Fernsehsignalen ausgestrahlt, sondern bestenfalls mehrere Male, je nach Anforderung. Der Benutzer sollte aber den Hinweis mehrmals angezeigt erhalten.

Zugleich bietet das Abspeichern der Information auch dem Servicemann, der von dem Endverbraucher für die Behebung des Problems beauftragt wird, die Möglichkeit, sich über das Problem informieren zu können. Darüber hinaus kann eine solche Information aber auch eine Steuerinformation für das Gerät beinhalten, die es ermöglicht, beispielsweise Baugruppen oder auch das gesamte Gerät aus sicherheitstechnischen Gründen abzuschalten, wobei die Abschaltung erst dann erfolgt, wenn die Information angezeigt worden ist. Für die Selektion und das Extrahieren der Daten müssen die gerätefamilienspezifische Adresse bzw. die Unteradressen in dem Empfangsgerät abgespeichert sein, damit der Selektor den entsprechenden Vergleich vornimmt, bevor die Einspeicherung der Informationsseite erfolgt.

Der Selektor überprüft also ständig auch durch Adressenvergleich, ob die Information, die übertragen wird - gleich ob es sich um eine Information handelt, die im Videotext- oder in einem anderen Format übertragen wird -, herausgelesen wird.

Die Information kann ferner Prioritätsdaten beinhalten. Die Priorität kann beispielsweise dadurch signalisiert werden, dass es sich um eine sicherheitstechnische Information handelt, die sofort anzuzeigen ist, oder dass es sich um eine allgemeine Information handelt, die nur auf ausdrücklichen Wunsch des Benutzers des Endgerätes durch Eingabe eines entsprechenden Steuerbefehls über die Fernbedienung angezeigt wird. Im Falle einer Information erster Priorität wird bei Empfang eines Fernsehsignals über den betreffenden gerade empfangenen Kanal die Information, die über diesen Kanal empfangen wird, sofort zur Anzeige gebracht.

Die Anzeige selbst kann entweder akustisch oder visuell erfolgen. Akustisch ist dies möglich, indem beispielsweise ein Vocoder aus den empfangenen Informationen eine Schallsequenz zur Ansteuerung eines Lautsprechers abgibt, der die empfangenen Daten in Sprachdaten umsetzt und ausgibt. Es ist aber auch möglich, beispielsweise nur einen Signalton abzugeben, um den Kunden beispielsweise zu veranlassen, durch eine Steuertaste die schriftbildliche Information abzurufen. Ferner ist es möglich, eine LED anzusteuern, um zu signalisieren, dass eine solche Information vorhanden ist, oder aber auch zu signalisieren, dass Gefahr für das Gerät droht. Es ist darüber hinaus aber auch möglich, in das laufende Fernsehbild, das gerade betrachtet wird, die Information sofort einzublenden und als sichtbare Wortinformation wiederzugeben.

Selbstverständlich kann die Information auch Anweisungen in Form von Piktogrammen enthalten, um den Benutzer des Gerätes z.B. zu Handlungen aufzufordern, ohne dies sprachlich ausdrücken zu müssen. Dies ist insbesondere dann gewünscht, wenn in einem Sendegebiet überwiegend Ausländer derartige Geräte besitzen, der Sprache aber nicht mächtig sind.

Die Erfindung lässt also jede Art der Signalisierung bzw. der Anzeige der Information zu, gleich ob diese akustisch oder visuell erfolgt.

Die vorteilhaften Ausgestaltungen des erfinderischen Informationssystems sind in den Unteransprüchen im einzelnen angegeben.

Die Informationen, die mittels Teletextseiten übertragen werden, sind in Seiten eingestellt, die durch kundenspezifische Nummern gekennzeichnet sind. Diese können als alphanumerische Nummern oder aber auch codiert als Hexcode-Seitennummern vorgesehen sein, so dass nur ein Decoder die Seitennummern zu selektieren vermag, der über eine entsprechende Vergleichsschaltung verfügt. Das System ist sowohl für den Fernsehtext, der mit analogen Fernsehsignalen übertragen wird, als auch für digitales Fernsehen (DVB) anwendbar, gleich ob diese Signale via Satellit oder terrestrisch übertragen werden. Im Falle der Anwendung auf digitale Fernsehsysteme sind die Informationen in Blöcken im Transportdatenstring untergebracht und werden von dem Selektor ausgelesen und zu einer geschlossenen Information wieder zusammengestellt. Um die Umsetzung für die Anzeige vorzunehmen, gleich ob es sich um eine verbale oder eine bildliche Umsetzung handelt, sind entsprechende Decoder im Endgerät vorhanden; solche Decoder sind bekannt. Die Abspeicherung der Daten kann auch empfangskanalneutral erfolgen, so dass beispielsweise beim Wiedereinschalten des Gerätes, bei dem beispielsweise sofort auf einen anderen Kanal abgestimmt wird, dennoch über eine OSD-Einblendung die abgespeicherte Information angezeigt wird. Sie kann selbstverständlich auch, wenn ein entsprechender Vocoder vorgesehen ist, als verbale Information ausgegeben werden. Dies hat den Vorteil, dass selbst dann, wenn der Benutzer eines Fernsehgerätes während des Empfangs der Sicherheitsinformation sich gerade nicht im Raum befindet, die Sicherheitsinformation in jedem Fall ihm nochmals angezeigt wird, und zwar unabhängig von der Abstimmung des Empfängers.

Es versteht sich von selbst, dass derartige Informationen üblicherweise von jenen Sendern übertragen werden sollten, die die höchste Verbreitung aufweisen. Im deutschsprachigen Raum wären dies beispielsweise ARD und ZDF aber auch private Sender, wie RTL u.a., die hohe Verbreitung aufweisen und geeignet sind, solche Informationen auf Veranlassung des Herstellers des Gerätes zu übertragen, da davon auszugehen ist, dass im Laufe eines Tages auf diese Sender mindestens einmal für einen erforderlichen Empfangszeitraum abgestimmt wird. Um auch alle Geräte zu erreichen, ist es erforderlich, dass die Informationen nicht nur einmal sondern sequenziell über einen längeren Zeitraum (1 bis 2 Tage) abgestrahlt werden.

Die Vorteile des Systems liegen auf der Hand. Wird z.B. nach dem Betrieb eines Fernsehgerätes nach drei oder vier Jahren festgestellt, dass ein Bauteil, das ausfallen kann, zu unzulässigen Wärmeentwicklungen führen kann, ist es möglich, einen entsprechenden Sicherheitshinweis gerätespezifisch, mindestens aber gerätefamilienspezifisch, zu übertragen. Wenn darüber hinaus auch eine Adressierung nach Seriengerätenummern möglich ist, zu welchem Zweck die entsprechende Nummer im Speicher des Gerätes werksseitig abgespeichert sein muss oder nachträglich per Fernbedienung oder Servicegerät eingegeben wird, kann auch eine gerätespezifische Information übertragen werden. Sie erreicht in jedem Fall den Benutzer und Besitzer des Gerätes. Im Falle von von einer Rückrufaktion betroffenen Geräten werden die Inhaber dieser Geräte auch tatsächlich erreicht, was beispielsweise gegenwärtig bei der Durchführung von Rückrufaktionen durch Anzeigen praktisch nicht möglich ist.

Um dem Benutzer die Möglichkeit zu geben, auch Informationen wieder auszublenden, kann in weiterer Ausgestaltung auch vorgesehen sein, dass die Informationen gelöscht werden können. Dies sollte aber bei sicherheitstechnischen Informationen nicht möglich sein. Zu diesem Zweck kann die Schaltung die Prioritätsbits auswerten und verriegeln. Darüber hinaus bietet die Möglichkeit der Abspeicherung der Information dem angerufenen Servicemann die Möglichkeit, sich über den Fehler unmittelbar zu informieren. Das System ist also universell für die Unterrichtung der Endverbraucher über den Zustand der Geräte einsetzbar.

## Patentansprüche

1. Informationssystem für ein elektronisches Gerät mit einer Empfangsschaltung für den Empfang von über einen Kanal übertragenen digitalen und/oder analogen Fernsehsignalen und Informationssignalen, mit einem Selektor zur Abtrennung der Informationssignale aus den Fernsehsignalen, einer Decodierschaltung zum Decodieren des Informationssignals, einer integrierten oder angeschlossenen Anzeigeeinrichtung zur visuellen oder phonetischen Wiedergabe mindestens der Informationssignale,
- wobei die Informationssignale gerätespezifische Adressen enthalten und das Gerät adressierbar ist,
- wobei eine übertragene Information mindestens eine gerätefamilienspezifische Adresse eines adressierbaren Empfangsgerätes eines bestimmten Herstellers enthält,
- wobei die Informationsinhalte verschlüsselt oder unverschlüsselt übertragen werden,
- wobei in einem Speicher des Gerätes mindestens eine zugehörige gerätefamilienspezifische Adresse abgespeichert ist, auf die der Datenselektor zugreift,
- wobei mit Empfang von Informationen diese mindestens auf gerätefamilienspezifische Adressen überprüft werden,
- wobei bei Übereinstimmung der gerätefamilienspezifischen Adresse in dem Speicher des Gerätes mit der der Information zugeordneten Adresse die Information selektiert empfangen und für die Anzeige bereit gestellt wird,
- wobei die Information automatisch unmittelbar nach der Selektion decodiert und sofort hörbar und/oder sichtbar dem Benutzer des Gerätes zu bestimmten Zeiten angezeigt wird,
- wobei als Anzeigemittel eine OSD-Steuerung im Gerät für ein Display als Anzeigevorrichtung und/oder ein Sprachvocoder vorgesehen sind, der die Information in verbale Sprachinformationen umsetzt und einen Lautsprecher ansteuert, und
- wobei die Information in einem Speicher des Gerätes als Servicehinweis für den Reparateur abrufbereit abgespeichert ist
**dadurch gekennzeichnet,**
**dass** die Informationen eine Steuerinformation zur Steuerung des Gerätes beinhalten, die es nach der Anzeige der Informationen ermöglichen, Baugruppen oder auch das gesamte Gerät abzuschalten.

2. Informationssystem nach Anspruch 1, **dadurch gekennzeichnet, dass** den Informationsdaten Anzeigeprioritätsdaten zugeordnet sind und dass die Anzeige in Abhängigkeit von den Prioritätsdaten sofort oder zeitverzögert gegenüber dem Empfang automatisch oder erst nach Auslösen einer Steuerfunktion durch Betätigen eines Funktionseinstellelementes auf einem Fembedienungsgeber oder einer Ortsbedienung am Gerät erfolgt.

3. Informationssystem nach Anspruch 1, **dadurch gekennzeichnet, dass** die Informationen in einer Teletextseite enthalten sind, die als kundenspezifische Unterseite nummeriert oder mit einem Hexcode oder einer anderen verschlüsselten Kennzeichnung versehen ist und von einem Dienstanbieter übertragen wird, und dass ein Teletextdecoder mit Teletextseiten im Empfänger vorgesehen ist, der die bestimmten gekennzeichneten Unterseiten oder die mit einer Hexseitennummer oder anderen speziellen Kennzeichen versehenen Teletextseiten ausliest, und dass die verschlüsselten Informationsinhalte entschlüsselt und angezeigt oder die unverschlüsselten Inhalte direkt angezeigt werden.

4. Informationssystem nach Anspruch 3, **dadurch gekennzeichnet, dass** die kundenspezifischen Nummern und/oder Kennzeichen der Teletextseiten die gerätefamilienspezifischen Adressen oder Teile derselben sind, wobei der weitere Teil als Informationsvorspann des Informationsinhaltes enthalten ist.

5. Informationssystem nach einem der Ansprüche 1 bis 4, **dadurch gekennzeichnet, dass** zusätzlich zur Gerätefamilienadresse gerätespezifische Adressen mit übertragen werden und werksseitig im Empfangsgerät abgespeichert sind und dass anhand der abgespeicherten gerätespezifischen Adresse die übertragenen gerätespezifischen Informationen selektiert werden.

6. Informationssystem nach Anspruch 5, **dadurch gekennzeichnet, dass** die Geräteseriennummer mindestens Bestandteil der gerätespezifischen Adresse ist.

7. Informationssystem nach Anspruch 1, 2 oder 3, **dadurch gekennzeichnet, dass** die Informationen digitale Blockinformationen sind und in einem Transportdatenstring eines Videosignals zusammen mit den im Header befindlichen Adressen übertragen werden oder dass die Informationen in Teletextseiten abgespeichert sind, die mit analogen Fernsehsignalen in den vertikalen Austastlücken oder als digitale Formate im Datenstring übertragen werden.

8. Informationssystem nach Anspruch 1, 2 oder 3 in Verbindung mit Anspruch 6, **dadurch gekennzeichnet, dass** der Decoder ein digitaler oder analoger Decoder ist.

9. Informationssystem nach Anspruch 7 oder 8, **dadurch gekennzeichnet, dass** die Information Bestandteil des Transportprotokolls eines MPEG-Signals ist.

10. Informationssystem nach Anspruch 1, **dadurch gekennzeichnet, dass** die Information Sicherheitsinformationen zu dem betreffenden Gerät enthält.

11. Informationssystem nach Anspruch 1, **dadurch gekennzeichnet, dass** die Informationen zusätzliche Software-Beeinflussungscodierungen zur Veränderung der Programmierung von Bedienfunktionen des Gerätes enthalten, die nach der Anzeige der Information das Gerät beeinflussen.

12. Informationssystem nach Anspruch 1, **dadurch gekennzeichnet, dass** die gerätespezifische und/oder die gerätefamilienspezifische Information in einem Speicher des Gerätes abgespeichert sind.

13. Informationssystem nach Anspruch 1 oder 2 in Verbindung mit Anspruch 12, **dadurch gekennzeichnet, dass** beim Einschalten des Gerätes oder beim Abstimmen auf einen Kanal die Information empfangen und angezeigt wird.

14. Informationssystem nach Anspruch 1, **dadurch gekennzeichnet, dass** an der Ortsbedienung oder Fernbedienung des Gerätes ein Bedienelement vorhanden ist oder eine entsprechende Funktion über einen Servicecomputer generierbar ist, bei dessen Betätigung oder Auslösung der Speicherinhalt mit den Informationen löschbar ist.

15. Informationssystem nach Anspruch 1, **dadurch gekennzeichnet, dass** die Informationen mehrfach übertragen werden und dass nach der Anzeige die Information automatisch oder durch Betätigung eines Speicherauslöseelementes an der Orts- oder Fernbedienung abgespeichert wird.

## Claims

1. Information system for an electronic apparatus with a receiving circuit for reception of digital and/or analog television signals and information signals transmitted by way of a channel, a selector for separation of the information signals from the television signals, a decoding circuit for decoding the information signal, an integrated or connected indicating device for visual or phonetic reproduction of at least the information signals,
- wherein the information signals contain apparatus-specific addresses and the apparatus is addressable,
- wherein a transmitted information contains at least one apparatus-family-specific address of an addressable receiving apparatus of a specific manufacturer,
- wherein the information contents are transmitted in coded or uncoded form,
- wherein at least one associated apparatus-family-specific address, which the data selector accesses, is stored in a memory of the apparatus,
- wherein with reception of items of information these are checked at least for apparatus-family-specific addresses,
- wherein on correspondence of the apparatus-family-specific address in the memory of the apparatus with the address associated with the information the information is selected as received and provided for indication,
- wherein the information is automatically decoded directly after the selection and is indicated to be immediately audible and/or visible to the user of the apparatus at specific times,
- wherein an OSC control in the apparatus for a display as indicating device and/or a speech vocoder is or are provided as indicating means, which convert the information into verbal speech data and control a loudspeaker in drive, and
- wherein the information is stored in a memory of the apparatus to be ready for call-up as service information for the repairer,
**characterised in that** the items of information contain a control information for control of the apparatus, which after the indication of the items of information enable switching off of subassemblies or also the entire apparatus.

2. Information system according to claim 1, **characterised in that** indication priority data are associated with the information data and that the indication takes place in dependence on the priority data either immediately or delayed in time relative to the reception automatically or only after triggering of a control function by actuation of a function setting element on a remote control transmitter or a local control at the apparatus.

3. Information system according to claim 1, **characterised in that** the items of information are contained in a teletext page which is numbered as a customer-specific sub-page or provided with a hexcode or another coded identification and is transmitted by a service provider, and that a teletext decoder with teletext pages is provided in the receiver, which reads out the specific identified sub-pages or the teletext pages provided with a hex page number or other special identification and that the coded information contents are decoded and indicated or the uncoded contents are directly indicated.

4. Information system according to claim 3, **characterised in that** the customer-specifc numbers and/or identifications of the teletext pages are the apparatus-family-specific addresses or parts of the same, wherein the further part is included as information preamble of the information content.

5. Information system according to one of claims 1 to 4, **characterised in that**, in addition to the apparatus family addresses, apparatus-specific addresses are transmitted therewith and are stored at the factory in the receiving apparatus and that the transmitted apparatus-specific items of information are selected on the basis of the stored apparatus-specific addresses.

6. Information system according to claim 5, **characterised in that** the apparatus serial number is at least a component of the apparatus-specific address.

7. Information system according to claim 1, 2 or 3, **characterised in that** the items of information are digital block items of information and are transmitted in a transport data string of a videosignal together with the addresses located in the header or that the items of information are stored in teletext pages, which are transmitted with analog television signals in the vertical blanking periods or as digital formats in the data string.

8. Information system according to claim 1, 2 or 3 in conjunction with claim 6,
**characterised in that** the decoder is a digital or analog decoder.

9. Information system according to claim 7 or 8, **characterised in that** the information is a component of the transport protocol of an MPEG signal.

10. Information system according to claim 1, **characterised in that** the information contains safety items of information with respect to the relevant apparatus.

11. Information system according to claim 1, **characterised in that** the items of information contain additional software influencing codes for changing the programming of control functions of the apparatus, which after the information influence the apparatus.

12. Information system according to claim 1, **characterised in that** the apparatus-specific and/or apparatus-family-specific information is or are stored in a memory of the apparatus.

13. Information system according to claim 1 or 2 in conjunction with claim 12, **characterised in that** on switching-on of the apparatus or on tuning to a channel the information is received and indicated.

14. Information system according to claim 1, **characterised in that** a control element is present at the local control or remote control of the apparatus or a corresponding function can be generated by way of a service computer, on the actuation or triggering of which the memory content with the items of information can be erased.

15. Information system according to claim 1, **characterised in that** the items of information are transmitted several times and that after the indication the information is stored automatically or by actuation of a memory triggering element at the local or remote control.

## Revendications

1. Système d'information pour un appareil électronique avec un circuit de réception destiné à la réception de signaux d'information et de signaux vidéo analogiques et/ou numériques transmis par le biais d'un canal, avec un sélecteur destiné à séparer les signaux d'information des signaux vidéo, avec un circuit de décodage destiné à décoder le signal d'information, avec un dispositif d'affichage raccordé ou intégré destiné à reproduire visuellement ou phonétiquement au moins des signaux d'information,
- les signaux d'information contenant des adresses propres à l'appareil, et l'appareil étant adressable,
- une information transmise contenant au moins une adresse propre de la famille de l'appareil d'un appareil de réception adressable d'un fabricant donné,
- les contenus informatifs étant transmis de manière codée ou décodée,
- une adresse propre de la famille de l'appareil correspondante au moins étant enregistrée dans une mémoire de l'appareil, adresse à laquelle le sélecteur accède,
- lors de la réception d'informations, au moins les adresses propres de la famille d'appareil étant vérifiées,
- lors de la concordance de l'adresse propre de la famille d'appareil dans la mémoire de l'appareil avec l'adresse affectée à l'information, l'information étant reçue de façon sélective et mise à disposition pour affichage,
- l'information étant automatiquement directement affichée de façon décodée après la sélection et immédiatement audible et/ou visible par l'utilisateur de l'appareil à des moments donnés,
- une commande OSD et/ou un crypteur-décrypteur vocal étant prévus comme moyens d'affichage dans l'appareil pour affichage comme dispositif d'affichage, lequel crypteur-décrypteur convertit les informations en informations verbales et commande un haut-parleur, et
- les informations étant enregistrées dans une mémoire de l'appareil comme notes de service prêtes à être appelées par le réparateur,
**caractérisé en ce que** les informations contiennent une information de commande destinée à commander l'appareil, lesquelles permettent, après l'affichage des informations, de débrancher des blocs ou l'appareil entier.

2. Système d'information selon la revendication 1, **caractérisé en ce que** des données de priorité d'affichage sont affectées aux données d'information et **en ce que** l'affichage a lieu, en fonction des données de priorité, immédiatement ou en décalage par rapport à la réception, automatiquement ou tout d'abord après le déclenchement d'une fonction de commande par l'actionnement d'un élément de réglage de fonction sur un appareil télécommandé ou par une intervention sur site sur l'appareil.

3. Système d'information selon la revendication 1, **caractérisé en ce que** les informations sont contenues dans une page de télétexte, qui est numérotée comme page secondaire propre au client ou qui est prévue avec un code hexadécimal ou une autre identification codée et est transmise par un prestataire de services, et **en ce qu'**un décodeur de télétexte est prévu avec des pages de télétexte dans le récepteur, lequel lit les pages secondaires marquées ou les pages de télétexte prévues avec un numéro de page hexadécimal ou d'autres codes spéciaux, et **en ce que** le contenu des informations codées est décodé et affiché ou le contenu décodé est directement affiché.

4. Système d'information selon la revendication 3, **caractérisé en ce que** les numéros et/ou codes propres au client des pages de télétexte sont des adresses ou des parties d'adresses propres à la famille d'appareil, l'autre partie étant contenue comme début d'information du contenu informatif.

5. Système d'information selon l'une quelconque des revendications 1 à 4,
**caractérisé en ce que**, outre l'adresse de la famille d'appareil, des adresses propres à l'appareil sont transmises et enregistrées, à l'usine, dans l'appareil de réception, et **en ce que**, à l'aide de l'adresse enregistrée propre à l'appareil, les informations transmises propres à l'appareil sont sélectionnées.

6. Système d'information selon la revendication 5, **caractérisé en ce que** le numéro de série de l'appareil correspond au moins à un composant de l'adresse propre à l'appareil.

7. Système d'information selon la revendication 1, 2 ou 3, **caractérisé en ce que** les informations sont des informations de blocs numériques et sont transmises dans une chaîne de données de transport d'un signal vidéo conjointement avec l'adresse présente dans l'en-tête ou **en ce que** les informations sont enregistrées dans les pages de télétexte, qui sont transmises avec les signaux vidéo analogiques dans les intervalles de suppression verticaux ou comme formats numériques dans la chaîne de données.

8. Système d'information selon la revendication 1, 2 ou 3 en relation avec la revendication 6, **caractérisé en ce que** le décodeur est un décodeur numérique ou analogique.

9. Système d'information selon la revendication 7 ou 8, **caractérisé en ce que** les informations sont un élément du protocole de transport d'un signal MPEG.

10. Système d'information selon la revendication 1, **caractérisé en ce que** les informations contiennent des informations de sécurité relatives à l'appareil concerné.

11. Système d'information selon la revendication 1, **caractérisé en ce que** les informations contiennent des codes d'influence logiciels supplémentaires destinés à modifier la programmation des fonctions d'utilisation de l'appareil, lesquels influencent l'appareil après l'affichage des informations.

12. Système d'information selon la revendication 1, **caractérisé en ce que** les informations propres à l'appareil et/ou propres à la famille d'appareil sont enregistrées dans une mémoire de l'appareil.

13. Système d'information selon la revendication 1 ou 2 en relation avec la revendication 12, **caractérisé en ce que**, lorsque l'appareil est allumé ou réglé sur un canal, les informations sont reçues et affichées.

14. Système d'information selon la revendication 1, **caractérisé en ce que** lors d'une intervention sur site ou d'une utilisation à distance de l'appareil, il existe un élément de commande ou une fonction correspondante qui peut être générée via un ordinateur de service, dont l'actionnement ou le déclenchement du contenu de la mémoire avec les informations peut être supprimé.

15. Système d'information selon la revendication 1, **caractérisé en ce que** les informations sont transmises plusieurs fois, et **en ce que**, après l'affichage, les informations sont enregistrées automatiquement ou par l'actionnement d'un élément de déclenchement de la mémoire par une intervention sur site ou une utilisation à distance.
